(19) Europäisches Patentamt
European Patent Office
Office européen des brevets

(11) EP 2 922 068 B1

(12) **EUROPEAN PATENT SPECIFICATION**

(45) Date of publication and mention of the grant of the patent:
**13.12.2017  Bulletin 2017/50**

(51) Int Cl.:
***H01B 3/44*** *(2006.01)*   ***C08L 23/06*** *(2006.01)*

(21) Application number: **15000776.3**

(22) Date of filing: **16.03.2015**

(54) **METHOD OF MANUFACTURING INSULATING MATERIAL, MASTER BATCH, INSULATING MATERIAL AND POWER CABLE**

VERFAHREN ZUR HERSTELLUNG VON ISOLIERMATERIAL, MASTERBATCH, ISOLIERMATERIAL UND STROMKABEL

PROCÉDÉ DE FABRICATION D'UN MATÉRIAU ISOLANT, MÉLANGE MAÎTRE, MATÉRIAU ISOLANT ET CÂBLE D'ALIMENTATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.03.2014   JP 2014058647**

(43) Date of publication of application:
**23.09.2015   Bulletin 2015/39**

(73) Proprietor: **Sumitomo Electric Industries, Ltd.**
**Osaka-shi, Osaka 541-0041 (JP)**

(72) Inventors:
• **Inoue, Yoshiyuki**
  **Tokyo, 107-0051 (JP)**
• **Yamazaki, Takanori**
  **Tokyo, 107-0051 (JP)**
• **Murata, Yoshinao**
  **Tokyo, 107-0051 (JP)**
• **Katayama, Tomohiko**
  **Tokyo, 107-0051 (JP)**

(74) Representative: **Müller-Boré & Partner**
**Patentanwälte PartG mbB**
**Friedenheimer Brücke 21**
**80639 München (DE)**

(56) References cited:
**CN-A- 103 613 828     JP-A- H1 186 636**

**Description**

Technical Field

The present invention relates to a method of manufacturing an insulating material, a master batch, an insulating material and a power cable.

Description of the Related Art

A solid insulated cable such as cross-linked polyethylene cable, is generally used as AC voltage. Meanwhile, it is known that dielectric strength of such a solid insulated cable is unstable to DC voltage, and it can be considered that this is because space charge is accumulated in an insulating layer.

Therefore, in order to suppress the accumulation of the space charge in the insulating layer, and stabilize the dielectric strength to DC voltage, document 1 discloses a method of mixing a polar inorganic filler such as magnesium oxide in the insulating layer.

Further, in order to suppress a phenomenon that a void is generated at an interface between the polar inorganic filler and surrounding polyethylene and lightning impulse strength is reduced, patent document 2 discloses a method of mixing a maleic anhydride-modified polyethylene (called MAH-PE hereafter) having a modified amount of 0.1% or more, in a range of 1 phr or more and 10 phr or less.

In addition, patent document 3 discloses a power cable in which carbon black is added to an insulator (insulating layer) as an inorganic filler.

Prior Art Document

Patent document

   Patent document 1 : Japanese examined Patent Publication No.Sho57-21805
   Patent document 2: Patent Publication No.3428388
   Patent document 3: Patent Publication No.3602297

Summary of the Invention

Problem to be solved by the Invention

An object of the present invention is to provide a method of manufacturing an insulating material, a master batch, an insulating material and a power cable capable of improving dispersibility of an inorganic filler and obtaining an excellent insulation performance even if not increasing a thickness of an insulating layer.

Means for solving the Problem

According to a first aspect of the present invention, there is provided a method of manufacturing an insulating material, including:

   a first mixing step of mixing a base resin containing polyethylene and maleic anhydride-modified polyethylene, and an inorganic filler, to thereby form a master batch; and
   a second mixing step of further mixing polyethylene in the master batch, to thereby form an insulating material,
   wherein a copolymerization ratio of maleic anhydride in the maleic anhydride-modified polyethylene is 0.1% or more and 0.5% or less,
   a melt flow rate of the maleic anhydride-modified polyethylene when measurement temperature is 190°C and load is 2.16kgf, is 1/2 times or more and twice or less with respect to a melt flow rate of the polyethylene,

the inorganic filler contains magnesium oxide having an average primary particle diameter of 10 nm or more and 200 nm or less and having purity of 95 wt% or more,
the average primary particle diameter is defined as a particle size at 50% cumulative value in a particle size distribution obtained by a particle diameter measurement using a laser diffraction scattering method or an electron microscopy,
in the first mixing step, a volume ratio of the maleic anhydride-modified polyethylene with respect to the base resin is 10% or more and 50% or less, and

in the second mixing step, the mixture amount of the inorganic filler in the insulating material is finally adjusted to 3 wt% or less when a base resin in the insulating material is 100 wt%.

According to a second aspect of the present invention, there is provided the method of manufacturing an insulating material, comprising:

a first mixing step of mixing a base resin containing polyethylene and maleic anhydride-modified polyethylene, and an inorganic filler, to thereby form a master batch; and
a second mixing step of further mixing polyethylene with the master batch, to thereby form an insulating material, wherein
a copolymerization ratio of maleic anhydride in the maleic anhydride-modified polyethylene is 0.1% or more and 0.5% or less,
a melt flow rate of the maleic anhydride-modified polyethylene when measurement temperature is 190°C and load is 2.16kgf, is 1/2 times or more and twice or less with respect to a melt flow rate of the polyethylene,
the inorganic filler contains a conductive carbon black having an average primary particle diameter of 10 nm or more and 100 nm or less, and having a carbon content rate of 97 wt% or more,
the average primary particle diameter is defined as a particle size at 50% cumulative value in a particle size distribution obtained by a particle diameter measurement using a laser diffraction scattering method or an electron microscopy,
in the first mixing step, a volume ratio of the maleic anhydride-modified polyethylene with respect to the base resin is 10% or more and 50% or less, and
in the second mixing step, the mixture amount of the inorganic filler in the insulating material is finally adjusted to 3 wt% or less when a base resin in the insulating material is 100 wt%.

According to a sixth aspect of the present invention, there is provided a master batch manufactured by the method of manufacturing an insulating material of any one of the first to fifth aspects.

According to a seventh aspect of the present invention, there is provided an insulating material, which is manufactured using the master batch of the sixth aspect.

According to an eighth aspect of the present invention, there is provided a power cable, which has an insulating layer formed by the insulating material of the seventh aspect.

Advantage of the Invention

According to the present invention, a method of manufacturing an insulating material, a master batch, an insulating material and a power cable are provided, which are capable of improving dispersibility of an inorganic filler and obtaining an excellent insulation performance even if not increasing a thickness of an insulating layer.

Brief description of the drawings

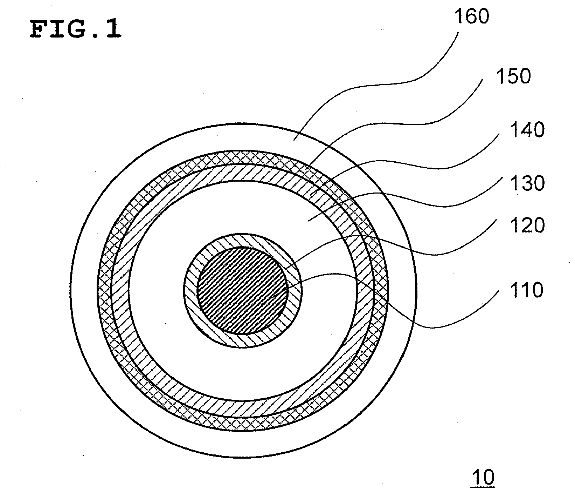

FIG. 1 is a sectional view of a power cable orthogonal to an axial direction according to an embodiment of the present invention.

Detailed description of the Invention

<Knowledge obtained by inventors of the present invention>

First, knowledge obtained by the inventors of the present invention is schematically described.

As described in the abovementioned patent document 1, DC resistance and DC breakdown voltage can be increased by adding an inorganic filler such as magnesium oxide or carbon black, etc., in an insulating layer. It can be considered that this is because electrons moving in the insulating layer are trapped by the inorganic filler, thus reducing a moving degree of the electrons, and suppressing a phenomenon that more electrons than the trapped electrons are injected from an electrode in the vicinity of the electrode.

In this case, it is effective to enlarge a surface area of the inorganic filler that traps the electrons. Therefore, use of the inorganic filler with a small primary particle size, and use of so-called a nano-size inorganic filler can be considered.

However, the inorganic filler with a small primary particle size is easily aggregated, thus easily forming a large secondary particle. In this case, dispersibility of the inorganic filler is deteriorated, and therefore there is a possibility that the effect of trapping the electrons is reduced, irrespective of a large surface area of an individual primary particle. As a result, there is a possibility that DC resistance or DC breakdown voltage of the insulating layer is not sufficiently large.

Therefore, as a strenuous effort by the inventors of the present invention, it is found that in the step of forming a master batch (fist mixing step), the dispersibility of the inorganic filler can be improved and the abovementioned problem can be solved by mixing the maleic anhydride-modified polyethylene (MAH-PE) having a specific characteristic together with polyethylene and inorganic filler. The following embodiments are based on such a knowledge.

<An embodiment of the present invention>

(1) Method of manufacturing an insulating material

A method of manufacturing an insulating material according to an embodiment of the present invention will be described.

(First mixing step)

First, as described below, a master batch is formed by kneading a base resin containing polyethylene (called PE hereafter) and MAH-PE, and an inorganic filler, by a mixer such as a Bumbary mixer or a kneader, and thereafter the mixture was granulated by an extruder. The step from kneading to granulating may be performed in a batch process, using a biaxial extruder for example having a high kneading action. Such a series of step is called a "first mixing step" hereafter.

(PE)

PE of any one of high density, medium density, low density, ultra low-density, or linear low density for example, is used as PE mixed into the base resin. Here, for example low density PE (called LDPE hereafter) is used as PE mixed into the base resin.

(MAH-PE)

Further, MAH-PE is mixed into the base resin. Thus, adhesion between PE and the inorganic filler described later is improved, so that a gap is prevented from generating between PE and the inorganic filler.

Here, the copolymerization ratio of maleic anhydride (called MAH hereafter) in MAH-PE (modification rate of MAH-PE) is 0.1% or more and 0.5% or less. Since the copolymerization ratio of the MAH in MAH-PE is 0.1% or more, affinity between MAH-PE and the inorganic filler is improved, and the dispersibility of the inorganic filler is improved. Meanwhile, since the copolymerization ratio of the MAH in MAH-PE is 0.5% or less, separation of MAH-PE and PE in the master batch can be suppressed.

Further, the melt flow rate (MFR) of MAH-PE when measurement temperature is 190°C and the load is 2.16 kgf, is 1/2 times or more and twice or less with respect to MFR of PE. When MFR of MAH-PE is less than 1/2 or larger than twice with respect to MFR of PE, mutual dispersibility between MAH-PE and PE is not sufficient, thus easily forming an area where only PE exists partially. The area containing only PE is poor in affinity with the inorganic filler, and therefore in such an area containing only PE, the inorganic filler is hardly dispersed in a primary particle state. Accordingly, in the abovementioned case that MFR of MAH-PE is less than 1/2 or larger than twice with respect to MFR of PE, the effective surface area of the inorganic filler is reduced, and therefore there is a possibility that the DC resistance and DC withstand voltage characteristic are reduced. In contrast, since MFR of MAH-PE is 1/2 times or more and twice or less with respect to MFR of PE, it is easy to uniformly mix MAH-PE and PE in the master batch.

Further, in the first mixing step, a volume ratio of MAH-PE with respect to the base resin is 10% or more and 50% or less. When the volume ratio of MAH-PE with respect to the base resin is less than 10%, the inorganic filler is not sufficiently covered with MAH-PE, and there is a possibility that the dispersibility of the inorganic filler is deteriorated. In contrast, since the volume ratio of MAH-PE with respect to the base resin is 10% or more, the effect of improving the dispersibility of the inorganic filler can be obtained. Meanwhile, by setting the volume ratio of MAH-PE with respect to the base resin to 50% or less, namely by setting MAH-PE amount to not more than PE amount by volume ratio, PE becomes a sea part, and MAH-PE becomes an island part in a dispersion structure (sea-island structure) of the base resin formed in the master batch. Thus, the dispersibility of the master batch itself can be improved when mixing with PE in the subsequent second mixing step.

Specific gravity of MAH-PE used here is substantially equal to the specific gravity of PE. Thus, the volume ratio of MAH-PE with respect to the base resin is substantially equal to the volume ratio of MAH-PE with respect to the base resin. When the specific gravity of MAH-PE is significantly different from the specific gravity of PE, the mutual dispersibility between MAH-PE and PE is reduced similarly to the case of a significant difference between MFR of MAH-PE and MFR of PE, and this is not preferable.

(Inorganic filler)

Further, the inorganic filler is mixed with the base resin. The inorganic filler contains at least any one of the magnesium oxide (MgO) and conductive carbon black.

When the magnesium oxide is mixed as the inorganic filler, the average primary particle diameter is 10 nm or more and 200 nm or less for example. The "average particle diameter" called here means a particle size at 50% cumulative value in a particle size distribution obtained by a particle diameter measurement using a laser diffraction scattering method or an electron microscopy. When the average primary particle diameter of the magnesium oxide is less than 10 nm, it is easy to cause a secondary aggregation of the magnesium oxide, and as a result, there is a possibility that the magnesium oxide is hardly dispersed in a primary particle state. In contrast, since the average primary particle diameter of the magnesium oxide is in the above range (10nm or more and 20nm or less), thereby enlarging the surface area of the magnesium oxide, the effect of trapping electrons is improved. If the average primary particle diamter of the magnesium oxide is in the above range, magnesium oxide is uniformly dispersed in the master batch in the primary particle state by mixing MAH-PE in the master batch.

Further, for example artificially synthesized magnesium oxide is preferable, and purity of the magnesium oxide is 95 wt% or more for example.

When conductive carbon black is mixed as the inorganic filler, the average primary particle diameter of the carbon black is 10 nm or more and 100 nm or less for example. Since the average primary particle diameter of the carbon black is in the above range, thus enlarging the surface area of the carbon black, and the effect of trapping electrons is improved. In addition, when the average primary particle diameter of the carbon black is in the above range, carbon black is uniformly dispersed in the master batch in the primary particle state by mixing MAH-PE in the master batch.

Further, carbon content rate of the carbon black is 97 wt% or more for example.

In the first mixing step, 10 wt% or more of the inorganic filler is mixed in the master batch when the base resin is 100 wt%. In the first mixing step, the inorganic filler is mixed at a high concentration, and the concentration of the inorganic filler is reduced to a specific concentration by adding PE in the second mixing step described later.

(Second mixing step)

Then, the master batch and further PE are introduced into a hopper of an extruder and mixed (kneaded) by the extruder, to thereby form a pellet-shaped insulating material for example. For example an antioxidant or other compounding agents are mixed or additionally mixed in this stage. This step is called a "second mixing step" hereafter.

In the second mixing step, content of the base resin in the insulating material is more increased than content of the base resin in the master batch by further mixing PE with (in) the master batch. Further, in the second mixing step, content of MAH-PE with respect to the base resin in the insulating material is more reduced than content of MAH-PE with respect to the base resin in the master batch. Further, in the second mixing step, the mixture amount of the inorganic filler in the insulating material is finally adjusted to 3 wt% or less when the base resin in the insulating material is 100 wt%.

(PE)

The same PE as PE mixed in the base resin in the first mixing step, is used as PE mixed in the second mixing step. Here, for example LDPE is used as PE mixed in the second mixing step.

(The other additive)

In order to suppress oxidation degradation during manufacture or when using a power cable, an antioxidant may be mixed in the master batch in the first mixing step or the insulating material in the second mixing step. At least one kind or a plurality of kinds of the following antioxidants can be used: 2,2-thio-diethylene bis [3-(3,5-di-t-butyl-4-hydroxyphenyl) propionate], pentaerythrityl-tetrakis [3-(3,5-di-t-butyl-4-hydroxyphenyl) propionate], octadecyl-3-(3,5-di-t-butyl-4-hydroxyphenyl) propionate, 2,4-bis-[(octylthio) methyl]-o-cresol, 2,4 bis-(n-octylthio)-6-(4-hydroxy-3,5-di-t-butylanilino )-1,3,5-triazine, bis [2-methyl-4-{3-n-alkyl (C12 or C14) thio propionyloxy}-5-t-butylphenyl] sulfide, and 4,4'-thiobis (3-methyl-6-t-butylphenol), etc.

Further, a lubricant such as fatty acid metal salt or fatty acid amide may be mixed in the master batch in the first mixing step or the insulating material in the second mixing step, for improving processability.

Further, for example organic peroxide (free radical generator) that cross-linking the insulating material, is mixed in the insulating material in the second mixing step. At least any one of dicumyl peroxide, 2,5-dimethyl-2,5-di (t-butyl peroxy) hexane, 1,3-bis (t-butylperoxyisopropyl) benzene, etc., is used as the organic peroxide.

(2) Method of manufacturing a power cable

Next, a method of manufacturing a power cable 10 according to an embodiment of the present invention will be described, using FIG. 1. FIG. 1 is a sectional view of a power cable orthogonal to an axial direction according to this embodiment. In this embodiment, explanation is given for a case of forming a DC power cable 10 by 3-layer co-extrusion for example.

(Conductor forming step)

First, multiple wires are twisted, to thereby form a conductor 110.

(Extrusion step)

A compound fabricated by ethylene-vinyl acetate copolymer, etc., mixed with conductive carbon black previously, is introduced into an extruder A that forms an internal semiconductor layer 120, in the 3-layer co-extruder. The temperature of the extruder A is set to 110°C or more and 160°C or less.
Next, the abovementioned pellet made of the insulating material is introduced into an extruder B that forms an insulating layer 130, and is heated and kneaded. The temperature of the extruder B is set to 120°C or more and 150°C or less for example.
Next, the same material as the material of the extruder A is introduced ito an extruder C that forms an external semiconductor layer 140. However, the external semiconductor layer 140 may be formed by a different material from the material of the internal semiconductor layer 120. The temperature of the extruder C is set to 110°C or more and 160°C or less for example.
Next, each mixture from the extruders A to C is introduced to a common head, and the internal semiconductor layer 120, the insulating layer 130, and the external semiconductor layer 140 are simultaneously extruded from inside to outside on an outer periphery of the conductor 110. Thereafter, the insulating layer 130 is cross-linked by heating by radiation of an infrared heater, or heating by a method of causing heat conduction through a heat medium such as high temperature nitrogen gas or silicone oil, etc., in a cross-linking tube pressurized by nitrogen gas, etc. Thus, a cable core is formed, which is constituted of the conductor 110, internal semiconductor layer 120, insulating layer 130, and external semiconductor layer 140.
Next, a shielding layer 150 is formed by winding wires made of copper (called copper wires hereafter) or a copper tape around outside of the external semiconductor layer 140. In this case, a tape made of rubberized cloth, etc., may be wound on inside or outside of the copper wires or the copper tape, in order to provide a cushioning property to these parts, or firmly press the copper wires, etc.
In addition, a corrugated metal cover made of aluminum, etc., may be provided to the outside of the external semiconductor layer 140. In this case, since the corrugated metal cover has a function as a shielding layer, winding of the copper wires or the copper tape may be omitted.
Next, a vinyl chloride is charged into the extruder and extruded therefrom, to thereby form a sheath 160 on the outer periphery of the shielding layer 150.
As described above, the power cable 10 is manufactured as a solid insulated DC power cable.

(3) Structure of the power cable

Explanation is given for a DC power cable 10 manufactured by the abovementioned method, using FIG. 1. As shown in FIG. 1, the power cable 10 has the conductor 110, internal semiconductor layer 120, insulating layer 130, external semiconductor layer 140, shielding layer 150, and sheath 160 from inside to outside.

(Conductor)

The conductor 110 is, for example, is a copper conductor, etc., formed by twisting a plurality of wires made of pure copper (Cu) or copper alloy, etc.

(Internal semiconductor layer)

The internal semiconductor layer 120 has an ethylene-vinyl acetate copolymer and a conductive carbon black for example. The internal semiconductor layer 120 may have at least any one of ethylene-methyl acrylate copolymer, ethylene-ethyl acrylate copolymer, and ethylene-butyl acrylate copolymer for example, instead of ethylene-vinyl acetate copolymer.

(Insulating layer)

The insulating layer 130 is formed by the insulating material of this embodiment. The insulating layer 130 has the base resin for the insulating layer containing PE and MAH-PE, inorganic filler, organic peroxide, and antioxidant. As described above, the mixture amount of the inorganic filler in the insulating layer 130 is 3 wt% or less when the base resin for the insulating layer is 100 wt%. Since 3 wt% or less of the inorganic filler is contained in the insulating layer 130, accumulation of a space charge can be suppressed while maintaining the insulation performance of the insulating layer 130.

(External semiconductor layer)

The external semiconductor layer 140 has a similar structure as the internal semiconductor layer 120 for example.

(Other structure of the power cable)

The shielding layer 150 is formed as a wire shield, etc., coated with conductive wires such as a plurality of soft copper wires. In addition, the shielding layer 150 may be a copper tape.

The corrugated metal cover made of aluminum, etc., may be provided to the outside of the external semiconductor layer 140. In this case, since the corrugated metal cover has the function as the shielding layer, the copper wires and the copper tape may not be provided.

Further, the sheath 160 is made of a polyvinyl chloride or polyethylene coating material.

(Each dimension)

As a specific dimension of the power cable 10, for example, diameter of the conductor 110 is 5mm or more and 60mm or less, thickness of the internal semiconductor layer is 0.5 mm or more and 3 mm or less, thickness of the insulating layer 130 is 3 mm or more and 35 mm or less, and thickness of the external semiconductor layer 140 is 0.5 mm or more and 3 m or less. Voltage applied to the power cable 10 of this embodiment is 3kV or more and 600kV or less.

(4) Effect of this embodiment

According to this embodiment or its modified example, following one or a plurality of effects can be exhibited.

(a) According to this embodiment, in the first mixing step, the master batch is formed by mixing the base resin containing PE and MAH-PE, and the inorganic filler. Next, in the second mixing step, the insulating material is formed by further mixing PE with the master batch. Thus, in the first mixing step, since MAH-PE is mixed in the master batch, the secondary particle of the inorganic filler is decomposed into a form of the primary particle, and the primary particle can be uniformly dispersed. Also, in the second mixing step, the master batch itself can be satisfactorily dispersed in the insulating material, with a result that the insulating material can be obtained in a state that primary particles of the inorganic filler are uniformly dispersed. By uniformly dispersing in the insulating layer 130, the primary particles of the inorganic filler having a large surface area, the effect of trapping electrons by the inorganic filler can be improved, and DC resistance or DC breakdown voltage can be increased. Accordingly, the insulating layer 130 having an excellent insulation performance can be obtained, even if not increasing the thickness of the insulating layer 130.

(b) According to this embodiment, the copolymerization ratio of MAH to MAH-PE is 0.1% or more and 0.5% or less. Since the copolymerization ratio of MAH to MAH-PE is 0.1% or more, affinity between MAH-PE and the inorganic filler is improved, and the dispersibility of the inorganic filler is improved. Meanwhile, since the copolymerization ratio of MAH in MAH-PE is 0.5% or less, MAH-PE and PE can be prevented from separating from each other in the master batch.

(c) According to this embodiment, the melt flow rate (MFR) of MAH-PE when measurement temperature is 190°C and the load is 2.16 kgf, is 1/2 times or more and twice or less with respect to MFR of PE. When MFR of MAH-PE is less than 1/2 or larger than twice with respect to MFR of PE, mutual dispersibility between MAH-PE and PE is not sufficient, thus easily forming an area where only PE exists partially. The area containing only PE is poor in affinity with the inorganic filler, and therefore in such an area containing only PE, the inorganic filler is hardly dispersed in a primary particle state. Accordingly, in the abovementioned case that MFR of MAH-PE is less than 1/2 or larger than twice with respect to MFR of PE, the effective surface area of the inorganic filler is reduced, and therefore there is a possibility that the DC resistance and DC voltage and DC withstand voltage characteristic are reduced. In contrast, MFR of MAH-PE is 1/2 times or more and twice or les with respect to the melt flow rate of MFR of PE, and therefore it is easy to uniformly mix MAH-PE and PE in the master batch.

(d) According to this embodiment, in the first mixing step, the volume ratio of MAH-PE with respect to the base resin is 10% or more and 50% or less. When the volume ratio of MAH-PE with respect to the base resin is less than 10%, the inorganic filler is not sufficiently covered with MAH-PE, and there is a possibility that the dispersibility of the inorganic filler is deteriorated. In contrast, since the volume ratio of MAH-PE with respect to the base resin is 10% or more, the effect of improving the dispersibility of the inorganic filler can be obtained. Meanwhile, by setting the volume ratio of MAH-PE with respect to the base resin to 50% or less, namely by setting MAH-PE amount to not more than PE amount by volume ratio, PE becomes a sea part, and MAH-PE becomes an island part in a dispersion structure (sea-island structure) of the base resin formed in the master batch. Thus, the dispersibility of the master batch itself can be improved when mixing with PE in the subsequent second mixing step.

<The other embodiment of the present invention>

As described above, embodiments of the present invention are described specifically. However, the present invention is not limited to the abovementioned embodiments, and can be variously modified in a range not departing from the gist of the invention.

In the abovementioned embodiment, explanation is given for the method of a so-called 3-layer coextrusion in which the power cable 10 is formed by simultaneously extruding the internal semiconductor layer, insulating layer, and external semiconductor layer from inside to outside on the outer periphery of the conductor. However, the power cable may be formed by separately extruding the internal semiconductor layer, the insulating layer, and the external semiconductor layer.

Examples

Next, examples of the present invention will be described together with comparative examples.

(1) Fabrication of the insulating material and a sheet sample

As shown in tables 1 and 2, master batches of examples 1 to 12, and comparative examples 1 to 12 are formed in the first mixing step. In the second mixing step, by using these master batches, insulating materials of examples 1 to 12 and comparative example 1 to 12 are fabricated so as to have following compositions.

LDPE: 97phr (parts by weight)
MAH-PE: 3.0 phr
Mgo or carbon black: 1.0 phr
Dicumyl peroxide: 2.0 phr 4,4'-thiobis (3-methyl-6-t-butylphenol): 0.2 phr

A numerical value (%) of MAH of MAH-PE in tables 1 and 2 shows the copolymerization ratio of MAH in MAH-PE. Also, MFR in tables 1 and 2 shows the melt flow rate measured under a condition that the measurement temperature is 190°C and load is 2.16kgf.

The specific gravity of MAH-PE used here is substantially equal to the specific gravity of PE. Accordingly, parts by weight of MAH-PE with respect to the base resin shown in tables and 2, are substantially equal to the volume ratio of MAH-PE to the base resin.

[Table 1]

(UNIT OF MIXING AMOUNT: PART BY WEIGHT)

| | | EXAMPLE | | | | | | COMPARATIVE EXAMPLE | | | | | |
|---|---|---|---|---|---|---|---|---|---|---|---|---|---|
| | | 1 | 2 | 3 | 4 | 5 | 6 | 1 | 2 | 3 | 4 | 5 | 6 |
| MASTER BATCH COMPOSITION | LDPE(DENSITY 0.920g/cm³, MFR=1g/10min) | 90 | 55 | 55 | 55 | 55 | 55 | 95 | 55 | 55 | 55 | 40 | 55 |
| | MAH-PE (MAH=0.1%, MFR=0.5g/10min) | 10 | 45 | | 45 | 45 | | 5 | | | | 60 | |
| | MAH-PE (MAH=0.5%, MFR=1g/10min) | | | 45 | | | | | | | | | |
| | MAH-PE (MAH=0.5%, MFR=2g/10min) | | | | | | 45 | | | | | | |
| | MAH-PE (MAH=1.0%, MFR=1g/10min) | | | | | | | | 45 | | | | |
| | MAH-PE (MAH=0.5%, MFR=0.1g/10min) | | | | | | | | | 45 | | | |
| | MAH-PE (MAH=0.5%, MFR=10g/10min) | | | | | | | | | | 45 | | |
| | MAH-PE (MAH=0.05%, MFR=1g/10min) | | | | | | | | | | | | 45 |
| | MgO (b about 0.05μm) | 15 | 15 | 15 | | 20 | 15 | 15 | 15 | 15 | 15 | 20 | 15 |
| | MgO (b about 0.2μm) | | | | 15 | | | | | | | | |
| a | VOLUME RESISTIVITY (Ω·cm) | $7 \times 10^{15}$ | $7 \times 10^{15}$ | $6 \times 10^{15}$ | $6 \times 10^{15}$ | $5 \times 10^{15}$ | $5 \times 10^{15}$ | $1 \times 10^{15}$ | $2 \times 10^{15}$ | $2 \times 10^{15}$ | $1 \times 10^{15}$ | $8 \times 10^{14}$ | $7 \times 10^{14}$ |
| | LONG-TERM DIRECT CURRENT V-t TEST | O | O | O | O | O | O | x | △ | △ | x | x | x |

a = EVALUATION

b = AVERAGE PRIMARY PARTICLE DIAMETER

[Table 2]

(UNIT OF MIXING AMOUNT: PART BY WEIGHT)

| | | EXAMPLE | | | | | | COMPARATIVE EXAMPLE | | | | | |
|---|---|---|---|---|---|---|---|---|---|---|---|---|---|
| | | 7 | 8 | 9 | 10 | 11 | 12 | 7 | 8 | 9 | 10 | 11 | 12 |
| COMPOSITION / MASTER BATCH | LDPE (DENSITY 0.920g/cm³, MFR=1g/10min) | 90 | 55 | 55 | 55 | 55 | 55 | 95 | 55 | 55 | 55 | 40 | 55 |
| | MAH-PE (MAH=0.1%, MFR=0.5g/10min) | 10 | 45 | | 45 | 45 | | 5 | | | | 60 | |
| | MAH-PE (MAH=0.5%, MFR=1g/10min) | | | 45 | | | | | | | | | |
| | MAH-PE (MAH=0.5%, MFR=2g/10min) | | | | | | 45 | | | | | | |
| | MAH-PE (MAH=1.0%, MFR=1g/10min) | | | | | | | | 45 | | | | |
| | MAH-PE (MAH=0.5%, MFR=0.1g/10min) | | | | | | | | | 45 | | | |
| | MAH-PE (MAH=0.5%, MFR=10g/10min) | | | | | | | | | | 45 | | |
| | MAH-PE (MAH=0.05%, MFR=1g/10min) | | | | | | | | | | | | 45 |
| | CARBON BLACK A | 15 | 15 | 15 | 15 | 20 | 15 | 15 | 15 | 15 | 15 | 20 | 15 |
| | CARBON BLACK B | | | | | | | | | | | | |
| | VOLUME RESISTIVITY (Ω·cm) | $5\times10^{15}$ | $6\times10^{15}$ | $5\times10^{15}$ | $4\times10^{15}$ | $5\times10^{15}$ | $4\times10^{15}$ | $8\times10^{14}$ | $1\times10^{15}$ | $1\times10^{15}$ | $8\times10^{14}$ | $8\times10^{14}$ | $6\times10^{14}$ |
| | LONG-TERM DIRECT CURRENT V-t TEST (a) | O | O | O | O | O | O | × | △ | △ | × | × | × |

a = EVALUATION

NOTE)

CARBON BLACK A: AVERAGE PRIMARY PARTICLE DIAMETER 0.022 μm, IODINE ADSORPTION AMOUNT 121mg/g, AMOUNT OF DBP OIL 114cm³/100g

CARBON BLACK B: AVERAGE PRIMARY PARTICLE DIAMETER 0.028 μm, IODINE ADSORPTION AMOUNT 86mg/g, AMOUNT OF DBP OIL 75 cm³/100g

Further, press forming was performed under a condition of 180°C for 10 minutes, using the insulating material of examples 1 to 12 and comparative examples 1 to 12, to thereby fabricate a sheet sample with a thickness of 0.15 mm.

(2) Test

The following test was performed, using sheet samples of examples 1 to 12 and comparative examples 1 to 12.

(Volume resistivity)

Volume resistivity was evaluated under conditions that temperature is 90°C and DC applied electric field is 80kV/mm, using sheet samples of examples 1 to 12 and comparative examples 1 to 12.

(Long-term DC V-t test)

Long-term DC V-t test was performed as follows, using sheet samples of examples 1 to 12 and comparative examples 1 to 12. In this test, in a silicon oil at temperature of 90°C, a specific DC electric field was applied to abovementioned each sheet sample by using a flat electrode having a diameter of 25mm, to thereby evaluate the time required for the occurrence of the dielectric breakdown. At this time, the applied electric field was adjusted between 10kV/mm and 300 kV/mm, so as to obtain a result that the time required for the dielectric breakdown was several minutes to 1000 hours or more. From these results, a relation between dielectric breakdown filed (V) and time (t) (V-t curve) was obtained, and life index (n) was obtained by the following formula (1).

$$V^n \times t = const. \ldots (1)$$

Wherein, V:electric field (k V/mm), and t:time (h) .

As a result, life index of 20 or more was evaluated by (o), and life index of 15 or more and less than 20 was evaluated by ($\triangle$), and life index of less than 15 was evaluated by ($\times$).

(3) Result

As shown in tables 1 and 2, in any one of the examples 1 to 12, the volume resistivity was $4 \times 10^{15}\Omega$ or more, and an excellent result could be obtained in the long-term DC V-t test.

When examples 2, 3, 8, 9 and comparative examples 2, 6, 8, 12 were compared, In comparative examples 2 and 8, the copolymerization ratio of MAH-PE in MAH-PE was (1.0%) which was larger than 0.5%, and therefore the volume resistivity was lower than $4 \times 10^{15}\Omega\cdot$cm, and the life index obtained by the long-term DC V-t test was low. In comparative examples 2 and 8, since the copolymerization ratio of MAH in MAH-PE was larger than 0.5%, it can be considered that MAH-PE and PE are separated from each other in the master batch. Further, in comparative examples 6 and 12, the copolymerization ratio of MAH in MAH-PE was (0.05%) which was smaller than 0.1%, and therefore it was found that the volume resistivity was lower than $4 \times 10^{15}\Omega\cdot$cm and the life index obtained by the long-term DC V-t test was low. In comparative examples 6 and 12, since the copolymerization ratio of MAH in MAH-PE was smaller than 0.1%, it can be considered that affinity between MAH-PE and the inorganic filler is not improved, and the dispersibility of the inorganic filler is not satisfactory. In contrast, in examples 2, 3, 8, and 9, the copolymerization ratio of MAH in MAH-PE was 0.1% or more and 0.5% or less, and therefore in each case, the volume resistivity was $4 \times 10^{15}\Omega\cdot$cm or more, and a satisfactory result was obtained in the long-term DC V-t test. Accordingly, it can be considered that preferably the copolymerization ratio of MAH in MAH-PE mixed in the master batch is 0.1% or more and 0.5% or less.

When examples 2, 6, 8, 12 and comparative examples 3, 4, 9, 10 were compared, in comparative examples 3 and 9, MFR of MAH-PE was (1/10 times) which was less than 1/2 times with respect to MFR of PE(LDPE), and in comparative examples 4 and 10, MFR of MAH-PE was (10 times) and larger than twice with respect to MFR of PE. Therefore, in comparative examples 3, 4, 9, and 10, the volume resistivity was lower than $4 \times 10^{15}\Omega\cdot$cm and the life index obtained by the long-term DC V-t test was low. In comparative examples 3, 4, 9, and 10, it can be considered that MAH-PE and PE were not uniformly mixed in the master batch. In contrast, in examples 2, 6, 8, and 12, MFR of MAH-PE was 1/2 times or more and twice or less with respect to MFR of PE, and therefore in each case, the volume resistivity was $4 \times 10^{15}\Omega\cdot$cm or more, and satisfactory result was obtained in the long-term DC V-t test. Accordingly, it can be considered that preferably MFR of MAH-PE mixed in the master batch is 1/2 times or more and twice or less with respect to MFR of PE.

When examples 1 and 7, and comparative examples 1 and 7 were compared, in comparative examples 1 and 7, the volume ratio (substantially equal to parts by weight as described above) of MAH-PE with respect to the base resin in the master batch was (5%) which was less than 10%, and therefore, the volume resistivity was lower than $4 \times 10^{15}\Omega\cdot$cm, and the life index obtained by the long-term V-t test was low. In comparative examples 1 and 7, it can be considered that the inorganic filler was not sufficiently covered with MAH-PE, and the dispersibility of the inorganic filler was deteriorated. In contrast, in examples 1 and 7, the volume ratio of MAH-PE with respect to the base resin in the master batch was (10%) which was 10% or more. Therefore, in each case, the volume resistivity was $4 \times 10^{15}\Omega\cdot$cm or more, and satisfactory result was obtained in the long-term DC V-t test. Accordingly, it can be considered that preferably the volume ratio of MAH-PE with respect to the base resin is 10% or more in the first mixing step of forming the master batch.

When examples 5 and 11, and comparative examples 5 and 11 were compared, in comparative examples 5 and 11, the volume ratio of MAH-PE with respect to the base resin in the master batch was (60%) which was larger than 50%, and therefore the volume resistivity was lower than $4 \times 10^{15}\Omega\cdot$cm, and the life index obtained in the long-term DC V-t test was low. In comparative examples 5 and 11, it can be considered that the sea-island structure of PE and MAH-PE was not formed in the master batch, and the master batch itself was not uniformly dispersed in the second mixing step. In contrast, in examples 5 and 11, the volume ratio of MAH-PE with respect to the base resin in the master batch was (45%) which was 50% or less, and therefore in each case, the volume resistivity was $4 \times 10^{15}\Omega\cdot$cm or more and satisfactory result was obtained in the long-term DC V-t test. Accordingly, it can be considered that preferably the volume ratio of MAH-PE to the base resin is 50% or less in the first mixing step of forming the master batch.

(4) Manufacture of a power cable

A power cable was manufactured as follows, based on the abovementioned result.

First, a plurality of wires were twisted to thereby form a conductor.

An ethylene-vinyl acetate copolymer and a conductive carbon black were introduced at a specific ratio into the extruder A that forms the internal semiconductor layer, in the 3-layer co-extruder. Then, the pellet of the insulating material of the abovementioned example 2 or 8 was introduced into the extruder B that forms the insulating layer, and was heated and kneaded. Next, a similar material as the material of the extruder A was introduced into the extruder C that forms the external semiconductor layer. Next, the internal semiconductor layer, the insulating layer, and the external semiconductor layer were simultaneously extruded from inside to outside on the outer periphery of the conductor.

Next, outside of the external semiconductor layer was covered with a shielding layer composed of a wire shield. Subsequently, vinyl chloride resin was charged into the extruder, and extruded therefrom, to thereby form a sheath on the outer periphery of the shielding layer.

As described above, the power cable having a nominal voltage of 250kV was manufactured by using the insulating material of example 2 or 8. When the insulating layer of the power cable was confirmed by SEM, it was found that the inorganic filler made of magnesium oxide or carbon black was uniformly dispersed in a primary particle state without forming secondary particles. Further, when a specific DC voltage was applied to the power cable, the dielectric breakdown of the insulating layer didn't occur for a long time.

Description of Signs and Numerals

10 Power cable
110 Conductor
120 Internal semiconductor layer
130 Insulating layer
140 External semiconductor layer
150 Shielding layer
160 Sheath

**Claims**

1. A method of manufacturing an insulating material, comprising:

a first mixing step of mixing a base resin containing polyethylene and maleic anhydride-modified polyethylene, and an inorganic filler, to thereby form a master batch; and
a second mixing step of further mixing polyethylene with the master batch, to thereby form an insulating material,
wherein a copolymerization ratio of maleic anhydride in the maleic anhydride-modified polyethylene is 0.1% or more and 0.5% or less,
a melt flow rate of the maleic anhydride-modified polyethylene when measurement temperature is 190°C and load is 2.16kgf, is 1/2 times or more and twice or less with respect to a melt flow rate of the polyethylene,
the inorganic filler contains magnesium oxide having an average primary particle diameter of 10 nm or more and 200 nm or less and having purity of 95 wt% or more,
the average primary particle diameter is defined as a particle size at 50% cumulative value in a particle size distribution obtained by a particle diameter measurement using a laser diffraction scattering method or an electron microscopy,
in the first mixing step, a volume ratio of the maleic anhydride-modified polyethylene with respect to the base resin is 10% or more and 50% or less, and
in the second mixing step, the mixture amount of the inorganic filler in the insulating material is finally adjusted to 3 wt% or less when a base resin in the insulating material is 100 wt%.

2. A method of manufacturing an insulating material, comprising:

a first mixing step of mixing a base resin containing polyethylene and maleic anhydride-modified polyethylene, and an inorganic filler, to thereby form a master batch; and
a second mixing step of further mixing polyethylene with the master batch, to thereby form an insulating material, wherein a copolymerization ratio of maleic anhydride in the maleic anhydride-modified polyethylene is 0.1% or more and 0.5% or less,
a melt flow rate of the maleic anhydride-modified polyethylene when measurement temperature is 190°C and load is 2.16kgf, is 1/2 times or more and twice or less with respect to a melt flow rate of the polyethylene,
the inorganic filler contains a conductive carbon black having an average primary particle diameter of 10 nm or more and 100 nm or less, and having a carbon content rate of 97 wt% or more,
the average primary particle diameter is defined as a particle size at 50% cumulative value in a particle size distribution obtained by a particle diameter measurement using a laser diffraction scattering method or an electron microscopy,
in the first mixing step, a volume ratio of the maleic anhydride-modified polyethylene with respect to the base resin is 10% or more and 50% or less, and

in the second mixing step, the mixture amount of the inorganic filler in the insulating material is finally adjusted to 3 wt% or less when a base resin in the insulating material is 100 wt%.

3. The method of manufacturing an insulating material according to claim 1 or 2, wherein in the first mixing step, 10 wt% or more of the inorganic filler is mixed when the base resin is 100 wt%.

4. A master batch manufactured by the method of manufacturing an insulating material of any one of claims 1 to 3.

5. An insulating material, which is manufactured using the master batch of claim 4.

6. A power cable, which has an insulating layer formed by the insulating material of claim 5.

**Patentansprüche**

1. Verfahren zur Herstellung eines Isoliermaterials, umfassend:

einen ersten Mischungsschritt des Mischens eines Basisharzes, enthaltend Polyethylen und Maleinsäureanhydrid-modifiziertes Polyethylen, und eines anorganischen Füllmaterials, um dadurch eine Vormischung zu bilden; und
einen zweiten Mischungsschritt des weiteren Mischens von Polyethylen mit der Vormischung, um dadurch ein Isoliermaterial zu bilden,
wobei ein Copolymerisationsverhältnis von Maleinsäureanhydrid in dem Maleinsäureanhydrid-modifizierten Polyethylen 0,1% oder mehr und 0,5% oder weniger beträgt,
eine Schmelzfließrate des Maleinsäureanhydrid-modifizierten Polyethylens, wenn die Messtemperatur 190°C beträgt und die Last 2,16kgf beträgt, das 1/2-Fache oder mehr und Zweifache oder weniger bezüglich einer Schmelzfließrate des Polyethylens beträgt,
das anorganische Füllmaterial Magnesiumoxid enthält, das einen durchschnittlichen Primärteilchendurchmesser von 10 nm oder mehr und 200 nm oder weniger aufweist und eine Reinheit von 95 Gew.-% oder mehr aufweist,
der durchschnittliche Primärteilchendurchmesser als eine Teilchengröße bei 50% Summenwert in einer Teilchengrößenverteilung, erhalten durch eine Teilchendurchmessermessung unter Verwendung eines Laserbeugungsstreuverfahrens oder einer Elektronenmikroskopie, definiert ist,
in dem ersten Mischungsschritt ein Volumenverhältnis des Maleinsäureanhydrid-modifizierten Polyethylens bezüglich des Basisharzes 10% oder mehr und 50% oder weniger beträgt, und
in dem zweiten Mischungsschritt der Mischungsanteil des anorganischen Füllmaterials in dem Isoliermaterial schließlich zu 3 Gew.-% oder weniger eingestellt wird, wenn ein Basisharz in dem Isoliermaterial 100 Gew.-% entspricht.

2. Verfahren zur Herstellung eines Isoliermaterials, umfassend:

einen ersten Mischungsschritt des Mischens eines Basisharzes, enthaltend Polyethylen und Maleinsäureanhydrid-modifiziertes Polyethylen, und eines anorganischen Füllmaterials, um dadurch eine Vormischung zu bilden; und

einen zweiten Mischungsschritt des weiteren Mischens von Polyethylen mit der Vormischung, um dadurch ein Isoliermaterial zu bilden,

wobei ein Copolymerisationsverhältnis von Maleinsäureanhydrid in dem Maleinsäureanhydrid-modifizierten Polyethylen 0,1% oder mehr und 0,5% oder weniger beträgt,

eine Schmelzfließrate des Maleinsäureanhydrid-modifizierten Polyethylens, wenn die Messtemperatur 190°C beträgt und die Last 2,16kgf beträgt, das 1/2-Fache oder mehr und Zweifache oder weniger bezüglich einer Schmelzfließrate des Polyethylens beträgt,

das anorganische Füllmaterial ein leitfähiges Ruß enthält, das einen durchschnittlichen Primärteilchendurchmesser von 10 nm oder mehr und 100 nm oder weniger aufweist und eine Kohlenstoffanteilsrate von 97 Gew.-% oder mehr aufweist,

der durchschnittliche Primärteilchendurchmesser als eine Teilchengröße bei 50% Summenwert in einer Teilchengrößenverteilung, erhalten durch eine Teilchendurchmessermessung unter Verwendung eines Laserbeugungsstreuverfahrens oder einer Elektronenmikroskopie, definiert ist,

in dem ersten Mischungsschritt ein Volumenverhältnis des Maleinsäureanhydrid-modifizierten Polyethylens bezüglich des Basisharzes 10% oder mehr und 50% oder weniger beträgt, und

in dem zweiten Mischungsschritt der Mischungsanteil des anorganischen Füllmaterials in dem Isoliermaterial schließlich zu 3 Gew.-% oder weniger eingestellt wird, wenn ein Basisharz in dem Isoliermaterial 100 Gew.-% entspricht.

3. Verfahren zur Herstellung eines Isoliermaterials nach Anspruch 1 oder 2, wobei in dem ersten Mischungsschritt 10 Gew.-% oder mehr des anorganischen Füllmaterials beigemischt wird, wenn das Basisharz 100 Gew.-% entspricht.

4. Vormischung, hergestellt durch das Verfahren zur Herstellung eines Isoliermaterials nach einem der Ansprüche 1 bis 3.

5. Isoliermaterial, das unter Verwendung der Vormischung des Anspruchs 4 hergestellt ist.

6. Stromkabel, das eine Isolierschicht, gebildet durch das Isoliermaterial nach Anspruch 5, aufweist.

**Revendications**

1. Procédé de fabrication d'un matériau isolant, comprenant :

une première étape de mélange consistant à mélanger une résine de base contenant du polyéthylène et du polyéthylène modifié par anhydride maléique, et une charge inorganique, pour former ainsi un mélange maître ; et

une deuxième étape de mélange consistant à mélanger en outre du polyéthylène avec le mélange maître, pour former ainsi un matériau isolant,

dans lequel un rapport de copolymérisation d'anhydride maléique dans le polyéthylène modifié par anhydride maléique est de 0,1 % ou plus et de 0,5 % ou moins,

un indice de fluage du polyéthylène modifié par anhydride maléique lorsque la température de mesure est de 190°C et la charge est de 2,16 kgf, est de 1/2 fois ou plus et deux fois ou moins l'indice de fluage du polyéthylène,

la charge inorganique contient de l'oxyde de magnésium ayant un diamètre moyen de particule primaire de 10 nm ou plus et de 200 nm ou moins et ayant une pureté de 95 % en poids ou plus,

le diamètre moyen de particules primaires est défini comme une taille de particules à une valeur cumulée de 50% dans une distribution de taille de particule obtenue par une mesure de diamètre de particules à l'aide d'une méthode de diffusion par diffraction laser ou d'une microscopie électronique,

dans la première étape de mélange, un rapport en volume du polyéthylène modifié par anhydride maléique par rapport à la résine de base est de 10% ou plus et de 50% ou moins, et

dans la deuxième étape de mélange, la quantité de mélange de la charge inorganique dans le matériau isolant est au final ajustée à 3% en poids ou moins lorsqu'une résine de base dans le matériau isolant est de 100% en poids.

2. Procédé de fabrication d'un matériau isolant, comprenant :

une première étape de mélange consistant à mélanger une résine de base contenant du polyéthylène et du polyéthylène modifié par anhydride maléique, et une charge inorganique, pour former ainsi un mélange maître ; et

une deuxième étape de mélange consistant à mélanger en outre le polyéthylène avec le mélange maître, pour former ainsi un matériau isolant,

dans lequel un rapport de copolymérisation d'anhydride maléique dans le polyéthylène modifié par anhydride maléique est de 0,1% ou plus et de 0,5% ou moins,

un indice de fluage du polyéthylène modifié par anhydride maléique lorsque la température de mesure est de 190°C et la charge est de 2,16 kgf, est de 1/2 fois ou plus et deux fois ou moins l'indice de fluage du polyéthylène, la charge inorganique contient du noir de carbone conducteur ayant un diamètre moyen de particules primaires de 10 nm ou plus et de 100 nm ou moins, et ayant un taux de teneur en carbone de 97 % en poids ou plus,

le diamètre moyen de particules primaires est défini comme une taille de particules à une valeur cumulée de 50% dans une distribution de taille de particules obtenue par une mesure de diamètre de particules à l'aide d'une méthode de diffusion par diffraction laser ou d'une microscopie électronique,

dans la première étape de mélange, un rapport en volume du polyéthylène modifié par anhydride maléique par rapport à la résine de base est de 10% ou plus et de 50% ou moins, et

dans la deuxième étape de mélange, la quantité de mélange de la charge inorganique dans le matériau isolant est au final ajustée à 3% en poids ou moins lorsqu'une résine de base dans le matériau isolant est de 100% en poids.

3. Procédé de fabrication d'un matériau isolant selon la revendication 1 ou 2, dans lequel dans la première étape de mélange, on mélange 10% en poids ou plus de la charge inorganique lorsque la résine de base est de 100% en poids.

4. Mélange maître fabriqué par le procédé de fabrication d'un matériau isolant selon l'une quelconque des revendications 1 à 3.

5. Matériau isolant, qui est fabriqué à l'aide du mélange maître selon la revendication 4.

6. Câble d'alimentation, qui comporte une couche isolante formée par le matériau isolant selon la revendication 5.

FIG.1

160

150

140

130

120

110

10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO5721805 B
- JP 3428388 B
- JP 3602297 B